# EUROPÄISCHE PATENTANMELDUNG

(11) **EP 2 868 633 A1**
(43) Veröffentlichungstag der Anmeldung: **06.05.2015**
(21) Anmeldenummer: 14000294.0
(22) Anmeldetag: 28.01.2014
(51) Int. Cl.: C03B 33/08, B28D 1/22, C03B 23/203

(54) **Verfahren zum Fügen oder Trennen von elektrisch nicht leitenden Werkstücken**

(30) Priorität: 31.10.2013 DE 102013018331
(71) Anmelder: Linde Aktiengesellschaft, 80331 München (DE)
(72) Erfinder: Siewert, Erwan, 80802 München (DE)
(74) Vertreter: Kasseckert, Rainer

(57) **Zusammenfassung**

Die vorliegende Erfindung betrifft ein Verfahren zum Fügen oder Trennen von elektrisch nicht leitenden Werkstücken (151, 152), wobei die elektrisch nicht leitenden Werkstücke (151, 152) an einer Schweißstelle (160) mittels eines zwischen einer Elektrode (110) und einer Gegenelektrode (200) brennenden Lichtbogens (200) zusammengefügt oder getrennt werden.

## Beschreibung

Die Erfindung betrifft ein Verfahren zum Fügen oder Trennen von elektrisch nicht leitenden Werkstücken.

### Stand der Technik

Glas wird heutzutage beispielsweise im Gebäudebau immer häufiger als Konstruktionswerkstoff eingesetzt. Hierbei wird das Glas in Form von Glasplatten häufig als tragendes Element eines Gebäudes verwendet. Um den dabei auftretenden Belastungen Stand halten zu können, werden hohe Anforderungen an die benutzten Glasplatten gestellt. Den Dimensionen von Glasplatten sind zum einen durch den Herstellungsprozess sowie zum anderen durch den Transport der Glasplatten Grenzen gesetzt.

Um dennoch den hohen Anforderungen zu genügen und eine vielfältige Anwendung im Gebäudebau zu ermöglichen, können einzelne Glasplatten beispielsweise mit Streben, beispielsweise Stützstreben aus Stahl und/oder Beton, miteinander verbunden werden. Die einzelnen Glasplatten werden somit über eine formschlüssige Verbindung dieser Streben miteinander verbunden. Mitunter beeinträchtigen derartige Streben jedoch das ästhetische Gesamtbild des Gebäudes. Der Ästhetik, sowie dem Freiraum bei der Architektur eines Gebäudes sind somit Grenzen gesetzt. Des Weitern werden dadurch sowohl die Herstellungskosten der Glasplatten, als auch Kosten für deren Montage erhöht.

Aus ästhetischen Gründen, sowie zur Kostenreduzierung wird daher angestrebt, größere Glasflächen aus einzelnen Glasplatten herstellen zu können, ohne Streben aus Stahl, Beton oder ähnlichem nutzen zu müssen. Insbesondere um Transportkosten gering halten zu können, wäre es von Vorteil, Glasplatten erst an dem Ort, an dem sie letztendlichen montiert werden sollen, zu einer größeren Glasflächen fügen zu können.

Es ist daher wünschenswert, eine Möglichkeit bereitzustellen, um elektrisch nicht leitende Materialien, wie insbesondere Glas, auf technisch einfache Art und Weise fügen und trennen zu können.

### Offenbarung der Erfindung

Diese Aufgabe wird durch ein Verfahren zum Fügen oder Trennen von elektrisch nicht leitenden Werkstücken sowie eine Verwendung eines zwischen einer Elektrode und einer Gegenelektrode brennenden Lichtbogens zum Fügen oder Trennen von elektrisch nicht leitenden Werkstücken mit den Merkmalen der unabhängigen Patentansprüche gelöst. Die elektrisch nicht leitenden Werkstücke werden dabei an einer Schweißstelle mittels eines zwischen einer Elektrode und einer Gegenelektrode brennenden Lichtbogens zusammengefügt oder getrennt. Weitere Ausgestaltungen ergeben sich aus den Unteransprüchen sowie der nachfolgenden Beschreibung.

### Vorteile der Erfindung

Mittels des erfindungsgemäßen Verfahrens wird das Schweißen von elektrisch nicht leitenden Werkstücken mit einem Lichtbogen realisiert. Die elektrisch nicht leitenden Werkstücke werden dabei durch den Lichtbogen beaufschlagt. Insbesondere wirken dabei durch den Lichtbogen erzeugte thermische Effekte auf die elektrisch nicht leitenden Werkstücke. Durch den Lichtbogen werden die elektrisch nicht leitenden Werkstücke somit direkt oder indirekt aufgeschmolzen und getrennt oder gefügt.

Einerseits können zwei elektrisch nicht leitende Werkstücke dabei zusammengefügt werden. Diese zwei Werkstücke werden dabei jeweils an der Schweißnaht, also jeweils an der Stelle des jeweiligen Werkstücks, an welchen die beiden Werkstücke zusammengefügt werden sollen, durch den Lichtbogen aufgeschmolzen. An diesen aufgeschmolzenen Stellen der Werkstücke wird eine stoffschlüssige Verbindung zwischen den beiden Werkstücken hergestellt.

Andererseits können elektrisch nicht leitende Werkstücke erfindungsgemäß auch voneinander getrennt werden. Ein Werkstück wird dabei an der Schweißnaht, also an der Stelle, an welcher das Werkstück geteilt werden soll, durch den Lichtbogen aufgeschmolzen. Eine stoffschlüssige Verbindung wird dabei getrennt und das Werkstück wird in zwei elektrisch nicht leitende Werkstücke geteilt.

Durch die Erfindung wird es ermöglicht, kleinere nicht leitende Werkstücke flexibel und einfach zu größeren Werkstückplatten bzw. Werkstückflächen in beliebigen Formen und Größen zusammenzufügen. Somit ist es nicht notwendig, die elektrisch nicht leitenden Werkstücke bereits im Zuge eines Fertigungsprozesses beispielsweise in einer Fertigungsanlage zu den Werkstückplatten bzw. Werkstückflächen zusammenzusetzten und zusammengesetzt an ihren Bestimmungsort zu transportieren. Die elektrisch nicht leitenden Werkstücke können flexibel an dem Bestimmungsort, an dem sie letztendlichen montiert werden sollen, gefügt werden. Somit könne Transportaufwand und -kosten erheblich reduziert werden. Auch die Herstellungskosten sowie die Montagekosten können reduziert werden. Es können somit sehr viel flexiblere Geometrien hergestellt werden.

Größere Werkstückplatten bzw. Werkstückflächen können mittels der Erfindung auch auf einfache Weise in mehrere kleinere Werkstücke getrennt werden, beispielsweise um einen Transport zu erleichtern. An ihrem Bestimmungsort werden die kleineren Werkstücke letztendlich wieder im Sinne der Erfindung zusammengefügt.

Des Weiteren können somit Werkstücke in eine gewünschte Form gebracht und zugeschnitten werden. Auch Reparaturarbeiten und Ausbesserungen können durchgeführt werden. Defekte oder abgenutzte Teile des elektrisch nicht leitenden Werkstücks können abgetrennt werden und neue Teile können stattdessen an das Werkstück gefügt werden.

Durch die Erfindung ist es nicht nötig, die elektrisch nicht leitenden Werkstücke mittels Stützstrukturen zu größeren Flächen zusammenzusetzen und zu unterstützen. Derartige Stützstrukturen, wie beispielsweise Streben bzw. Stützstreben, z.B. aus Stahl und/oder Beton, können somit entfallen und Kosten für derartige Stützstrukturen werden eingespart. Ferner werden die elektrisch nicht leitenden Werkstücke erfindungsgemäß nicht durch eine formschlüssige Verbindung derartiger Stützstrukturen (indirekt) miteinander verbunden. Die elektrisch nicht leitenden Werkstücke werden durch eine stoffschlüssige Verbindung (direkt) miteinander verbunden. Einzelne nicht leitende Werkstücke können zu einer "reinen" größeren Werkstückplatte bzw. Werkstückfläche gefügt werden, ohne dass es zu Sprüngen bzw. einer Inhomogenität der Materialeigenschaften kommt.

Insbesondere werden die aufgeschmolzenen elektrisch nicht leitenden Werkstücke in eine bestimmte Form gebracht. Dabei können entsprechende Werkzeuge genutzt werden, um eine gewünschte, definierte Form der aufgeschmolzenen Werkstücke herzustellen. Mit diesen Werkzeugen wird insbesondere überschüssiges aufgeschmolzenes Material abgestrichen bzw. abgeschabt. Somit kann eine gewünschte Kontur bzw. ein gleichmäßiger Abschluss zwischen den Werkstücken geformt werden.

Die Elektrode ist dabei insbesondere als eine (stabförmige) Elektrode ausgebildet, insbesondere als Stabelektrode in einem Schweißbrenner zum Lichtbogenschweißen. Die Gegenelektrode ist außerhalb dieses Schweißbrenners angeordnet. Die Gegenelektrode kann insbesondere ebenfalls als eine stabförmige Elektrode ausgebildet sein. Die Gegenelektrode kann beispielsweise aus Kupfer, Eisen oder Wolfram bestehen. Die Position der Gegenelektrode kann insbesondere flexibel verstellt werden. Somit kann insbesondere eine relative Position und eine relative Ausrichtung der Gegenelektrode zu der Stabelektrode verändert werden.

Gemäß einer ersten bevorzugten Ausführung des erfindungsgemäßen Verfahrens wird ein übertragener Lichtbogen zum Fügen oder Trennen von elektrisch nicht leitenden Werkstücken genutzt.

Vorteilhafterweise wird die Schweißstelle der elektrisch nicht leitenden Werkstücke dabei zwischen die Elektrode und die Gegenelektrode eingebracht. Der Lichtbogen wird dabei vor dem Einbringen initiiert und brennt zwischen der Elektrode und der Gegenelektrode. Die elektrisch nicht leitenden Werkstücke werden stromlos in den Lichtbogen eingebracht. Die Schweißstelle der elektrisch nicht leitenden Werkstücke wird somit direkt durch den Lichtbogen aufgeschmolzen.

Bevorzugt wird die Gegenelektrode in der Nähe von oder auf einem der elektrisch nicht leitenden Werkstücke positioniert. Unter "in der Nähe von einem der Werkstücke" ist dabei zu verstehen, dass die Gegenelektrode in einem vergleichsweise geringen Abstand von der Oberfläche des Werkstücks entfernt positioniert wird, insbesondere in einem Abstand zwischen 0mm (wobei die Gegenelektrode auf dem Werkstück aufliegt) und 15mm. Insbesondere wird die Gegenelektrode in einem Abstand von dem Werkstück positioniert, der geringer ist als der Abstand zwischen der Elektrode und dem Werkstück. Insbesondere sind Elektrode, Werkstück und Gegenelektrode in jeweils äquidistanten Abständen angeordnet.

Die Gegenelektrode wird dabei im Zuge des Schweißprozesses entlang der Schweißstelle nachgeführt. Insbesondere wird die Gegenelektrode analog zu der Elektrode bewegt und parallel zu dieser nachgeführt. Insbesondere wird die Gegenelektrode dabei automatisch nachgeführt.

Vorzugsweise wird die Gegenelektrode mittels eines Magneten auf einem der elektrisch nicht leitenden Werkstücke positioniert. Die Gegenelektrode wird dabei mittels des Magneten an das Werkstück gepresst. Die Anziehungskraft des Magneten wirkt hierbei auf Eisen- und Stahl-Bauteile des Schweißbrenners oder auf Gegenmagneten, welche an dem Schweißbrenner angeordnet sind.

Gemäß einer zweiten bevorzugten Ausführung des erfindungsgemäßen Verfahrens wird ein nicht übertragener Lichtbogen zum Fügen oder Trennen von elektrisch nicht leitenden Werkstücken genutzt.

Vorteilhafterweise wird die Schweißstelle der elektrisch nicht leitenden Werkstücke dabei mit dem vom Lichtbogen erhitzten Gas, welches auf der der Elektrode abgewandten Seite der Gegenelektrode austritt, beaufschlagt. Der Lichtbogen wird dabei ebenfalls initiiert und brennt zwischen der Elektrode und der Gegenelektrode. Die elektrisch nicht leitenden Werkstücke werden dabei auf der Seite der Gegenelektrode eingebracht, welche der Elektrode abgewandt ist. Durch den Lichtbogen wird Gas hoch erhitzt. Dieses durch den Lichtbogen erhitzte Gas passiert die Gegenelektrode und trifft auf die Schweißstelle der elektrisch nicht leitenden Werkstücke. Die Schweißstelle wird nicht in den Lichtbogen eingebracht und wird nicht direkt, sondern indirekt durch den Lichtbogen aufgeschmolzen (Plasmajet).

Vorzugsweise wird ein Plasmagas in Form einer Plasmagasströmung dem Lichtbogen zugeführt. Als Lichtbogenschweißen wird dabei ein Plasmaschweißen genutzt. Das Plasmaschweißen zählt zum Wolfram-Schutzgasschweißen. Die Elektrode ist dabei aus Wolfram ausgebildet. Der Lichtbogen dient als Wärmequelle. Durch die hohe Temperatur und die hohe Energie des Lichtbogens wird das Plasmagas ionisiert, wodurch durch den Lichtbogen ein Plasma erzeugt wird. Somit wird ein auf die elektrisch nicht leitenden Werkstücke gerichteter Plasmastrahl bzw. Plasmajet erzeugt. Bei dem nicht übertragenen Lichtbogen trifft dieses Plasma in Form des Plasmajets auf die Gegenelektrode und passiert diese. Das Plasma bzw. der Plasmajet trifft somit auf die Schweißstelle der elektrisch nicht leitenden Werkstücke. Der Lichtbogen beaufschlagt die Schweißstelle mit diesem Plasma bzw. diesem Plasmajet. Die Schweißstelle wird durch die hohe Temperatur und die hohe Energie des Plasmas bzw. des Plasmajets aufgeschmolzen. Insbesondere wird Argon als Plasmagas zugeführt oder ein Gemisch aus Argon und Wasserstoff, insbesondere mit einem maximalen Wasserstoffanteil von 10%. Weiter insbesondere wird ein Gemisch aus Argon und Helium in beliebigen Mischungsverhältnissen.

Bevorzugt wird ein Fokussiergas in Form einer Fokussiergasströmung dem Lichtbogen zugeführt. Durch das Fokussiergas wird der Lichtbogen eingeschnürt. Insbesondere wird durch das Fokussiergas ein gegebenenfalls zugeführter Plasmajet eingeschnürt. Insbesondere werden Argon, Helium oder Wasserstoff oder deren Mischung als Fokussiergas zugeführt.

Vorzugsweise wird ein Schutzgas zugeführt, insbesondere in Form einer Schutzgasströmung. Das Schutzgas wird insbesondere genutzt, um Eigenschaften des Lichtbogens und gegebenenfalls der Schweißstelle zu beeinflussen. Mittels des Schutzgases wird insbesondere eine Oxidation der Schweißstelle verhindert. Als ein derartiges Schutzgas können Gase bzw. Gasmischungen verwendet werden, die zum Lichtbogenschweißen genutzt werden. Insbesondere werden Gase bzw. Gasmischungen verwendet, die beim Wolfram-Inertgasschweißen oder beim Plasmaschweißen genutzt werden. Insbesondere wird das Schutzgas über eine entsprechende Schutzgasdüse, welche in dem Schweißbrenner zum Lichtbogenschweißen angeordnet ist, zugeführt. Bevorzugt wird Argon, Stickstoff, Helium, Wasserstoff, Sauerstoff, Kohlendioxid oder Luft oder eine Mischung aus selbigen als Schutzgas zugeführt.

Plasmagas, Fokussiergas und Schutzgas können jeweils mittels einer entsprechenden Düse zugeführt werden. Insbesondere umgeben diese Düsen die Elektrode in dem Schweißbrenner konzentrisch. Vorteilhafterweise wird zum Trennen der elektrisch nicht leitenden Werkstücke ein Austreibgas in Form einer Austreibgasströmung der Schnittstelle der elektrisch nicht leitenden Werkstücke zugeführt. Dadurch werden (schmelz-)flüssige bzw. aufgeschmolzene Bestandteile der elektrisch nicht leitenden Werkstücke ausgetrieben, wodurch das Trennen der Werkstücke erleichtert wird.

Vorteilhafterweise wird zum Fügen der elektrisch nicht leitenden Werkstücke ein Zusatzwerkstoff in Form eines Drahtes und/oder in Form eines Pulvers zugeführt wird. Der Zusatzwerkstoff besitzt im Wesentlichen dieselbe Zusammensetzung wie die elektrisch nicht leitenden Werkstücke. Durch den Zusatzwerkstoff wird ein optimaler Übergang bzw. eine optimale Verbindung zwischen den zu fügenden Werkstücken gewährleistet. Der Zusatzwerkstoff wird dem Lichtbogen und/oder der Schweißstelle zugeführt. Somit wird der Zusatzwerkstoff durch die Wärme des Lichtbogens bzw. der Schweißstelle aufgeschmolzen und kann schmelzflüssig in die Schweißstelle übergehen. Insbesondere kann ein Schweißbrenner zum Lichtbogenschweißen eine entsprechende Vorrichtung zum Zuführen des Zusatzwerkstoffs aufweisen. Die Vorrichtung kann dabei dazu eingerichtet sein, den Zusatzwerkstoff in Form des Drahtes entsprechend nachzuführen. Die Vorrichtung kann auch als eine Düse ausgebildet sein, die dazu eingerichtet ist, den Zusatzwerkstoff in Form des Pulvers entsprechend zuzuführen. Das Pulver kann insbesondere auch zusammen mit dem Schutzgas in der Schutzgasströmung zugeführt werden.

In einer besonders bevorzugten Ausgestaltung der Erfindung wird Glas als elektrisch nicht leitendes Werkstücke verwendet. Insbesondere wird somit das Lichtbogenschweißen von Glas realisiert. Somit wird es ermöglicht, Glasflächen in beliebiger Form und Größe herzustellen. Glasflächen müssen somit nicht bereits in einem Fertigungsprozess beispielsweise in einer Fertigungsanlage in ihre endgültige Form und Größe gebracht werden, sondern können an ihrem Bestimmungsort zusammengefügt werden.

Die Erfindung kann insbesondere in der Gebäudebau Verwendung finden. Glasflächen, die den hohen Anforderungen und Belastungen als tragende Elemente eines Gebäudes Stand halten, können direkt an dem Ort, an dem sie letztendlich eingebaut werden, aus kleineren Glasplatten gefügt werden. Des Weiteren kann auf die Nutzung von Stützstrukturen verzichtet werden. Die Ästhetik des Gebäudes wird somit nicht beeinträchtigt und dennoch ist die bauliche Sicherheit gegeben.

Besonders bevorzugt wird das Wolfram-Inertgasschweißen oder das Plasmaschweißen als Verfahren zum Lichtbogenschweißen verwendet. Durch die Erfindung wird es somit ermöglicht, derartige Schweißverfahren zum Lichtbogenschweißen von elektrisch nicht leitenden Werkstücken, insbesondere von Glas, zu verwenden. Die Vorteile der Schweißverfahren (einfach zu handhabende, kompakte Schweißbrenner, die flexibel transportiert werden können und mit denen flexibel Werkstücke geschweißt werden können) werden auf das Fügen und Trennen elektrisch nicht leitender Werkstücke übertragen. Somit wird eine wirtschaftliche, preisgünstige, (arbeits-)sichere Möglichkeit bereitgestellt, elektrisch nicht leitende Werkstücke zu Fügen oder zu Trennen.

Die Erfindung betrifft weiterhin eine Verwendung eines zwischen einer Elektrode und einer Gegenelektrode brennenden Lichtbogens zum Fügen oder Trennen von elektrisch nicht leitenden Werkstücken. Ausgestaltungen dieser erfindungsgemäßen Verwendung ergeben sich aus der obigen Beschreibung des erfindungsgemäßen Verfahrens in analoger Art und Weise.

Die Erfindung und ihre Vorteile werden nun anhand der beigefügten Zeichnung weiter erläutert. In dieser zeigt
- Figur 1: schematisch einen Schweißbrenner zum Lichtbogenschweißen, der dazu eingerichtet ist, eine erste bevorzugte Ausführungsform eines erfindungsgemäßen Verfahrens durchzuführen, und
- Figur 2: schematisch einen Schweißbrenner zum Lichtbogenschweißen, der dazu eingerichtet ist, eine zweite bevorzugte Ausführungsform eines erfindungsgemäßen Verfahrens durchzuführen.

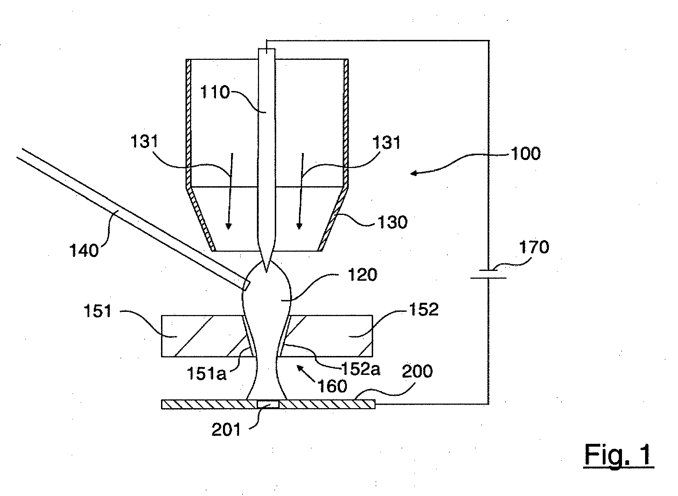

In Figur 1 ist ein Schweißbrenner zum Lichtbogenschweißen, in diesem speziellen Beispiel ein Plasmaschweißbrenner zum Plasmaschweißen, schematisch dargestellt und mit 100 bezeichnet. Der Schweißbrenner kann jedoch auch als ein anderer Schweißbrennertyp zum Wolfram-Schutzgasschweißen ausgbildet sein, beispielsweise als ein WIG-Brenner.

Der Schweißbrenner 100 weist eine Elektrode 110 auf. Die Elektrode 110 ist insbesondere als eine nichtabschmelzende Stabelektrode aus Wolfram ausgebildet. Die Elektrode 110 ist als eine Kathode ausgebildet und mit einem Minuspol einer Schweißstromquelle 170 verbunden.

Eine als Anode ausgebildete Gegenelektrode 200 ist mit einem Pluspol der Schweißstromquelle 170 verbunden. Die Gegenelektrode 200 ist insbesondere aus Kupfer ausgebildet. Die Gegenelektrode 200 ist in diesem speziellen Beispiel als eine Ringelektrode ausgebildet, welche ein Loch 201 bzw. eine Bohrung 201 aufweist. Durch dieses Loch 201 kann heißes Gas bzw. Plasma entweichen. Dadurch kann die Gegenelektrode 200 höher thermisch belastet werden. Die Gegenelektrode 200 kann auch als eine Elektrode ohne ein Loch 201 bzw. ohne eine Bohrung 201 sowie als Stab ausgebildet sein.

Zwischen der Elektrode 110 und der Gegenelektrode 200 brennt ein Lichtbogen 120. Der Schweißbrenner 100 kann insbesondere eine oder mehrere Düsen 130 aufweisen. Diese Düsen 130 sind insbesondere derart angeordnet, dass sie die Elektrode 110 konzentrisch umschließen. Durch diese Düsen 130 wird insbesondere ein Plasmagas, insbesondere Argon, zugeführt. Das Plasmagas wird in Form einer Plasmagasströmung dem Lichtbogen 120 zugeführt, angedeutet durch das Bezugszeichen 131. Das Plasmagas wird durch den Lichtbogen 120 bzw. durch dessen Wärme und Energie ionisiert, wodurch ein Plasma entsteht.

Des Weiteren können über weitere Düsen 130 (nicht dargestellt) zweckmäßigerweise ein Schutzgas in Form einer Schutzgasströmung und/oder ein Fokussiergas in Form einer Fokussiergasströmung zugeführt werden.

In diesem Beispiel wird der Lichtbogen 120 bzw. das Lichtbogenschweißen (in diesem speziellen Beispiel Plasmaschweißen mit dem Schweißbrenner 100) zum Fügen oder Trennen von elektrisch nicht leitenden Werkstücken 151 und 151 verwendet. Dabei sollen in diesem speziellen Beispiel zwei als Glasplatten 151 und 152 ausgebildete elektrisch nicht leitende Werkstücke gefügt werden.

Die Glasplatten 151 und 152 werden dabei zwischen die Elektrode 110 und die Gegenelektrode 200 eingebracht. Der Lichtbogen 120 wird in diesem Fall als ein übertragener Lichtbogen genutzt. Die Glasplatten 151 und 152 werden dabei jeweils mit einer Stelle 151a bzw. 152a dem Lichtbogen 120 zugeführt, an welchen die beiden Glasplatten 151 und 152 gefügt werden sollen. Diese Stellen 151 a und 152a bilden die Schweißstelle 160. Durch den Lichtbogen 120 bzw. die Wärme und die Energie des Lichtbogens 120 werden die Glasplatten 151 und 152 in einem Bereich um die Schweißstelle 160 herum bzw. an den Stellen 151 a und 152a aufgeschmolzen und können somit zusammengefügt werden. Zwischen den Glasplatten 151 und 152 wird somit eine stoffschlüssige Verbindung hergestellt. Wahlweise können dabei entweder der Schweißbrenner 100 oder die Glasplatten 151 und 152 verfahren bzw. verschoben werden.

Ein Zusatzwerkstoff, welcher im Wesentlichen dieselbe Zusammensetzung wie die Glasplatten 151 und 152 besitzt, wird in Form eines Zusatzdrahtes 140 dem Lichtbogen 120 zugeführt. Der Zusatzwerkstoff wird durch die Wärme bzw. die Energie des Lichtbogens 120 aufgeschmolzen und geht schmelzflüssig in die Schweißstelle 160 über. Der Zusatzdraht 140 kann auch der Schweißstelle 160 zugeführt werden. Der Zusatzdraht 140 wird dabei von der Wärme der Schweißstelle 160 aufgeschmolzen und geht schmelzflüssig in diese über. Alternativ oder zusätzlich kann der Zusatzwerkstoff in Form eines Pulvers in einer Gasströmung, insbesondere in der Schutzgasströmung, über die Düse 130 zugeführt werden.

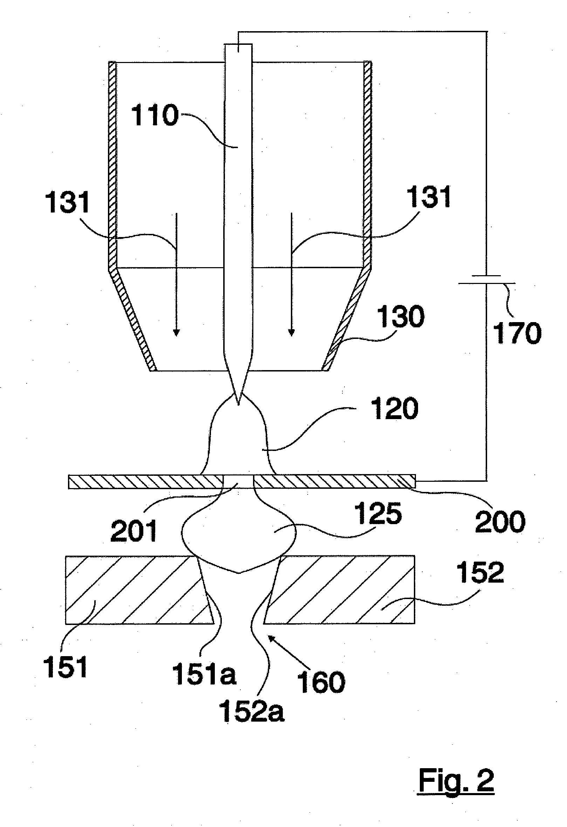

In Figur 2 ist ein Plasmaschweißbrenner 100 zum Plasmaschweißen analog zu Figur 1 schematisch dargestellt, der ebenfalls verwendet, wird um zwei Glasplatten 151 und 152 an der Schweißstelle zu fügen. Analog zu Figur 1 ist der Plasmabrenner auch in Figur 2 exemplarisch als ein Schweißbrennertypen zum Wolfram-Schutzgasschweißen ausgebildet. Der Schweißbrenner kann beipsielsweise auch als ein WIG-Schweißbrenner ausgebildet sein.

In diesem Beispiel wird der Lichtbogen 120 als ein nicht übertragener Lichtbogen genutzt. Die Schweißstelle 160 der Glasplatten 151 und 152 wird dabei mit von dem Lichtbogen 120 erhitztem Gas, welches in diesem Beispiel das Plasma ist, auf der der Elektrode 110 abgewandten Seite der Gegenelektrode 200 beaufschlagt.

Das Plasmagas, welches in Form der Plasmagasströmung 131 dem Lichtbogen 120 zugeführt und ionisiert wird, wird der Gegenelektrode 200 zugeleitet und kann diese passieren. Der Lichtbogen 120 brennt zwischen der Ektrode 110 des Plasmaschweißbrenners 100 und der Gegenelektrode 200. Die Gegenelektrode 200 kann dafür insbesondere ein spezielles Loch 201 bzw. eine Bohrung 201 aufweisen. Das Plasma passiert demgemäß die Gegenelektrode 200 durch die Bohrung 201 in Form eines Plasmastrahls 125 bzw. eines Plasmajets 125. Der Lichtbogen 120 beaufschlagt die Schweißstelle 160 der Glasplatten 151 und 152 mit diesem Plasmajet 125. Durch den Plasmajet 125 bzw. dessen Wärme und Energie werden die Glasplatten 151 und 152 in einem Bereich um die Schweißstelle 160 herum bzw. an den Stellen 151a und 152a aufgeschmolzen und können somit zusammengefügt werden.

Auch in dieser Ausgestaltung kann ein Zusatzwerkstoff (in Figur 2 der Übersichtlichkeit halber nicht dargestellt) in Form eines Drahtes und/oder eines Pulvers dem Lichtbogen 120 und/oder der Schweißstelle 160 zugeführt werden.

Alternativ kann der Lichtbogen 120 bzw. das Lichtbogenschweißen (in diesem speziellen Beispiel das Plasmaschweißen mit dem Schweißbrenner 100) auch zum Trennen von elektrisch nicht leitenden Werkstücken 151 und 151 verwendet werden. Dabei sind die zwei Glasplatten 151 und 152 bereits stoffschlüssig zu einer größeren Glasplatte verbunden. Die Schweißstelle 160 dieser größeren Glasplatte wird dabei dem Schweißbrenner gemäß Figur 1 oder Figur 2 zugeführt. Die Schweißstelle 160 dieser größeren Glasplatte ist dabei die Stelle, an welcher die größere Glasplatte in die zwei Glasplatten 151 und 152 getrennt werden soll. Insbesondere wird dabei über eine der Düsen 130 ein Austreibgas in Form einer Austreibgasströmung der Schweißstelle 160 zugeführt. Dadurch werden aufgeschmolzene, flüssige Bestandteile der Glasplatten 151 und 152 ausgetrieben.

### Bezugszeichenliste

- 100: Schweißbrenner
- 110: Elektrode
- 120: Lichtbogen
- 125: Plasmajet
- 130: Düse
- 131: Plasmagasströmung
- 140: Zusatzdraht
- 151: Glasplatte
- 152: Glasplatte
- 151a: Stelle/Schweißstelle der Glasplatte
- 152a: Stelle/Schweißstelle der Glasplatte
- 160: Schweißstelle
- 170: Schweißstromquelle
- 200: Gegenelektrode
- 201: Loch/Bohrung

## Patentansprüche

1. Verfahren zum Fügen oder Trennen von elektrisch nicht leitenden Werkstücken (151, 152),
**dadurch gekennzeichnet, dass**
die elektrisch nicht leitenden Werkstücke (151, 152) an einer Schweißstelle (160) mittels eines zwischen einer Elektrode (110) und einer Gegenelektrode (200) brennenden Lichtbogens (200) zusammengefügt oder getrennt werden.

2. Verfahren nach Anspruch 1, wobei die Schweißstelle (160) der elektrisch nicht leitenden Werkstücke (151, 152) zwischen die Elektrode (110) und die Gegenelektrode (200) eingebracht wird.

3. Verfahren nach Anspruch 2, wobei die Gegenelektrode (200) in der Nähe oder auf einem der elektrisch nicht leitenden Werkstücke (151, 152) positioniert wird.

4. Verfahren nach Anspruch 3, wobei die Gegenelektrode (200) mittels eines Magneten auf einem der elektrisch nicht leitenden Werkstücke (151, 152) positioniert wird.

5. Verfahren nach Anspruch 1, wobei die Schweißstelle (160) der elektrisch nicht leitenden Werkstücke (151, 152) mit von dem Lichtbogen (120) erhitztem Gas (125) auf der der Elektrode (110) abgewandten Seite der Gegenelektrode (200) beaufschlagt wird.

6. Verfahren nach einem der vorstehenden Ansprüche, wobei ein Plasmagas in Form einer Plasmagasströmung (131) dem Lichtbogen (120) zugeführt wird, das insbesondere Argon und/oder Wasserstoff enthält.

7. Verfahren nach einem der vorstehenden Ansprüche, wobei ein Fokussiergas in Form einer Fokussiergasströmung dem Lichtbogen (120) zugeführt wird und dadurch der Lichtbogen (120) eingeschnürt wird.

8. Verfahren nach einem der vorstehenden Ansprüche, wobei ein Schutzgas in Form einer Schutzgasströmung dem Lichtbogen (120) und/oder der Schweißstelle (160) zugeführt wird, das insbesondere Argon, Sauerstoff, Kohlendioxid und/oder Luft enthält.

9. Verfahren nach einem der vorstehenden Ansprüche zum Trennen der elektrisch nicht leitenden Werkstücke (151, 152), wobei ein Austreibgas in Form einer Austreibgasströmung der Schweißstelle (160) der elektrisch nicht leitenden Werkstücke (151, 152) zugeführt wird und dadurch flüssige Bestandteile der elektrisch nicht leitenden Werkstücke (151, 152) ausgetrieben werden.

10. Verfahren nach einem der vorstehenden Ansprüche zum Fügen der elektrisch nicht leitenden Werkstücke (151, 152), wobei ein Zusatzwerkstoff (180), welcher im Wesentlichen dieselbe Zusammensetzung wie die elektrisch nicht leitenden Werkstücke (151, 152) besitzt, in Form eines Drahtes und/oder in Form eines Pulvers dem Lichtbogen (120) und/oder der Schweißstelle (160) zugeführt wird.

11. Verfahren nach einem der vorstehenden Ansprüche, wobei Glas als elektrisch nicht leitende Werkstücke (151, 152) verwendet wird.

12. Verfahren nach einem der vorstehenden Ansprüche, wobei Wolfram-Inertgasschweißen oder Plasmaschweißen als Verfahren zum Lichtbogenschweißen verwendet wird.

13. Verwendung eines zwischen einer Elektrode (110) und einer Gegenelektrode (200) brennenden Lichtbogens (120) zum Fügen oder Trennen von elektrisch nicht leitenden Werkstücken (151, 152), wobei die elektrisch nicht leitenden Werkstücke (151, 152) an einer Schweißstelle (160) mittels des zwischen der Elektrode (110) und der Gegenelektrode (200) brennenden Lichtbogens (120) zusammengefügt oder getrennt werden.
